# EUROPÄISCHE PATENTANMELDUNG

(11) **EP 4 560 857 A1**
(43) Veröffentlichungstag der Anmeldung: **28.05.2025**
(21) Anmeldenummer: 23212314.1
(22) Anmeldetag: 27.11.2023
(51) Int. Cl.: H02G 3/10, H02G 3/12, H02G 3/04

(54) **INSTALLATIONS- UND VERTEILER SYSTEM**

(71) Anmelder: Tehalit GmbH, 67716 Heltersberg (DE)
(72) Erfinder: EBERLE, Patrick, 67716 Heltersberg (DE); MATTFELDT, Christian, 67716 Heltersberg (DE)
(74) Vertreter: Cabinet Nuss

(57) **Zusammenfassung**

Installations- und Verteilersystem, in welchem über Leitungen oder Kontaktierungen verbundene Anschlusseinrichtungen oder Geräteeinsätze zur elektrischen Energieversorgung oder zur Datenübermittlung innerhalb von Kanälen oder Gehäusen aufnehmbar sind, wobei die Anschlusseinrichtungen oder Geräteeinsätze durch Öffnungen oder Ausnehmungen in den Kanal oder das Gehäuse einsetzbar und dort mit einer ersten Schnapp- oder Rastverbindung einrastend fixierbar sind, bei welcher komplementär federnd und/oder materialelastisch ausgebildete Bereiche an der Anschlusseinrichtung oder am Geräteeinsatz einerseits und am Kanal (oder Gehäuses andererseits zusammenwirken, wobei mindestens ein der jeweiligen Anschlusseinrichtung oder dem jeweiligen Geräteeinsatz benachbart angeordnetes separates Verriegelungselement vorgesehen ist, welches einerseits mit mindestens einer Anschlusseinrichtung oder einem Geräteeinsatz verbindbar ist und welches andererseits mindestens eine dritte Verbindung bereitstellt, bei der komplementär zum Verriegelungselement ausgebildete Bereiche des Kanals oder Gehäuses formschlüssig so zusammenwirken, dass eine Verriegelung der ersten Verbindung erfolgt.

## Beschreibung

### FELD DER ERFINDUNG

Die vorliegende Erfindung betrifft ein Installations- und Verteilersystem, in welchem über Leitungen oder Kontaktierungen verbundene Anschlusseinrichtungen oder Geräteeinsätze zur elektrischen Energieversorgung oder zur Datenübermittlung innerhalb von Kanälen oder Gehäusen aufnehmbar sind, wobei die Anschlusseinrichtungen oder Geräteeinsätze durch Öffnungen oder Ausnehmungen in den Kanal oder das Gehäuse einsetzbar und dort mittels mindestens einer ersten Verbindung einrastend fixierbar sind, wobei die erste Verbindung als Schnapp- oder Rastverbindung ausgebildet ist, bei welcher komplementär federnd oder materialelastisch ausgebildete Bereiche an der Anschlusseinrichtung oder am Geräteeinsatz einerseits und am Kanal oder Gehäuses andererseits zusammenwirken.

Ebenfalls betrifft die Erfindung ein Verriegelungselement in einem solchen Installationssystem.

Installations- und Verteilersysteme, etwa Leitungsführungs- und Raumanschlusssysteme, insbesondere in Zweckbauten und Büroräumen, sind in verschiedensten Ausführungen bekannt und müssen neben technischen und optischen Ansprüchen auch insbesondere den Forderungen an eine einfache und sichere Montage genügen. Bei einer Bauart solcher Systeme sind Kanäle oder Gehäuse vorgesehen, in denen Anschlusseinrichtungen oder Geräteeinsätze aufgenommen sind, also etwa Steckdosen zur Stromversorgung, Telefonsteckdosen, Netzwerksteckdosen für Computeranschlüsse, Datenleitungen, Videosysteme und vieles mehr.

Die Kanäle oder Gehäuse können auf Böden, an Wänden, etwa unterhalb von Fensterfronten, an Brüstungen oder Geländern angeordnet sein, kurzum überall dort, wo ein einfacher und sicherer Zugang zu einer elektrischen Energieversorgung oder Datenübermittlung bereitgestellt werden soll. In diesem Kontext sollen beispielsweise Anschlüsse zur Elektroinstallation, Elektronikinstallation und optische Datenanschlüsse als zu den Anschlusseinrichtungen oder Geräteeinsätzen gehörig verstanden werden.

### HINTERGRUND

Im Hinblick auf die Montage der Anschlusseinrichtungen oder Geräteeinsätze in die Kanäle oder Gehäuse solcher Systeme ist einerseits ein einfacher und leicht zu bewerkstelligen Einbau in Kanäle oder Gehäuse gefordert, während andererseits die Geräteeinsätze und Anschlusseinrichtungen sicher und fest in den Gehäusen und Kanälen befestigt sein müssen. Betrachtet man beispielsweise Elektrosteckdosen, so darf sich auch bei einem verkanteten und unter starkem Zug stehenden Stecker eine im Kanal oder Gehäuse angeordnete Anschlusseinrichtung (Steckdose) nicht aus ihrer Befestigung lösen.

Zur Erleichterung der Montage werden vielfach solche Kanäle oder Gehäuse und die darin einsetzbaren Anschlusseinrichtungen oder Geräte so konstruiert, dass der Einbau über Rast- oder Schnappverbindungen erfolgt, so dass die Anschlusseinrichtungen oder Geräte einfach durch entsprechenden Druck von außen durch Öffnungen in die Kanäle oder Gehäuse eingesetzt werden und dort einrasten. Bei solchen Schnapp- oder Rastverbindung wirken in aller Regel komplementär federnd oder materialelastisch ausgebildete Bereiche an der Anschlusseinrichtung oder am Geräteeinsatz einerseits und am Kanal oder Gehäuse andererseits zusammen.

Ein Problem bei einer solchen Rast oder Schnappverbindung besteht jedoch darin, dass auf die Kanäle, Gehäuse oder Anschlusseinrichtungen und Geräte starke äußeren Belastungen wirken können, insbesondere bei möglicherweise achtlosem Umgang mit solchen Einrichtungen, etwa in einer Werkstatt oder in einem Produktionsbetrieb. Werden die Belastungen so groß, dass ein Verformen, ein Verkannten oder eine Schiefstellung der miteinander agierenden Verbindungsbereiche bewirkt wird, kann eine Situation eintreten, in der die Schnapp- oder Rastverbindungen sich lösen.

### BESCHREIBUNG DER ERFINDUNG

Für die Erfindung bestand daher die Aufgabe, ein Installations- und Verteilersystem der gattungsgemäßen Art bereitzustellen, bei welchem auch bei starken äußeren Belastungen die Anschlusseinrichtungen und Geräte sicher im Kanal oder Gehäuse fixiert bleiben, ohne dass auf die übliche einfache Verbindung und den üblichen unkomplizierten Einbau solcher Anschlusseinrichtungen oder Geräteeinsätze in Kanäle oder Gehäuses verzichtet werden muss.

Gelöst wird diese Aufgabe durch die Merkmale des Hauptanspruchs. Ebenfalls offenbart ist ein Verriegelungselement für den Einsatz in dem erfindungsgemäßen Installations- und Verteilersystem.

Vorteilhafte Ausgestaltungen und Weiterentwicklungen sind in den jeweiligen abhängigen Ansprüchen beschrieben.

Bei dem erfindungsgemäßen Installations- und Verteilersystem, bei dem über Leitungen oder Kontaktierungen verbundene Anschlusseinrichtungen oder Geräteeinsätze, bspw. zur elektrischen Energieversorgung oder zur Datenübermittlung, innerhalb von Kanälen oder Gehäusen aufnehmbar sind, sind eine oder mehrere Anschlusseinrichtungen oder Geräteeinsätze durch Öffnungen oder Ausnehmungen in den Kanal oder das Gehäuse einsetzbar und dort mittels mindestens einer ersten Verbindung einrastend fixierbar. Dazu umfasst die erste Verbindung komplementär zusammenwirkende Bereiche an der Anschlusseinrichtung oder am Geräteeinsatz einerseits und am Kanal oder Gehäuse andererseits, die eine der Einsetzrichtung entgegengesetzte Bewegung einer eingesetzten Anschlusseinrichtung oder eines Geräteeinsatzes blockieren. Erfindungsgemäß ist mindestens ein der jeweiligen Anschlusseinrichtung oder dem jeweiligen Geräteeinsatz benachbart angeordnetes separates Verriegelungselement vorgesehen, welches einerseits über mindestens eine zweite Verbindung mit der jeweiligen Anschlusseinrichtung oder dem jeweiligen Geräteeinsatz verbindbar ist und welches andererseits Verbindungseinrichtungen mindestens einer dritten Verbindung bereitstellt, welche formschlüssig in Bereiche des Kanals oder Gehäuses eingreifen und eine auseinandergerichtete Bewegung der komplementär zusammenwirkenden Bereiche der Anschlusseinrichtung oder des Geräteeinsatzes einerseits und des Kanals oder Gehäuses andererseits quer zu der Einsetzrichtung blockieren, so dass eine Verriegelung der ersten Verbindung erfolgt.

Es wird also die als Schnapp- oder Rastverbindung ausgebildete erste Verbindung, bei welcher komplementär federnd oder materialelastisch ausgebildete Bereiche an der Anschlusseinrichtung oder am Geräteeinsatz einerseits und am Kanal oder Gehäuses andererseits zusammenwirken, durch das Verriegelungselement mittels einer dritten Verbindung gesichert bzw. verriegelt.

Eine solche Sicherung bzw. Verriegelung der ersten Verbindung, also der Schnapp- oder Rastverbindung, mit der die Anschlusseinrichtungen oder Geräteeinsätze durch Öffnungen oder Ausnehmungen in den Kanal oder das Gehäuse eingesetzt und dort einrastend fixiert werden, verhindert, dass sich die Verbindung der zusammenwirkenden ausgebildete Bereiche an der Anschlusseinrichtung oder am Geräteeinsatz einerseits und am Kanal oder Gehäuses andererseits durch eine gegen die Rastkraft wirkende äußere Krafteinwirkung lösen lässt. Es ergibt sich dadurch eine erhebliche Verbesserung der Gebrauchseigenschaften, ohne dass - außer dem Verriegelungselement - zusätzliche Bauteile erforderlich sind oder zusätzliche Montageschritte erfolgen müssen.

Das ist insbesondere durch eine Ausbildung des Installations- und Verteilersystems erreichbar, bei der die Verriegelung der ersten Verbindung dadurch erfolgt, dass mindestens einer der zur ersten Verbindung gehörigen, komplementär zusammenwirkend ausgebildete Bereiche an der Anschlusseinrichtung oder am Geräteeinsatz einerseits und/oder am Kanal oder Gehäuses andererseits durch das Verriegelungselement in seiner federnden oder materialelastischen Eigenschaft blockiert wird. Die Verbindung wird damit starr und kann theoretisch bis zur Bruchgrenze der einzelnen Verbindungselemente oder des Verriegelungselements belastet werden, ohne dass sich die Anschlusseinrichtung oder der Geräteeinsatz aus dem Kanal oder dem Gehäuse löst.

Eine besonders einfach zu realisierende Weiterbildung des erfindungsgemäßen Installations- und Verteilersystems besteht darin, dass der an der Anschlusseinrichtung oder am Geräteeinsatz komplementär federnd oder materialelastisch ausgebildete Bereich der ersten Verbindung als federnde oder materialelastische Zunge oder Raste ausgebildet ist. Eine solche Zunge ist einfach herzustellen und kann etwa durch Einschieben von am Verriegelungselement vorgesehenen Unterlagen oder Zwischenstücken vollständig blockiert werden.

Eine andere Ausbildung des erfindungsgemäßen Installations- und Verteilersystems besteht darin, dass der am Kanal oder Gehäuse komplementär federnd und/oder materialelastisch ausgebildete Bereich der ersten Verbindung als federnde oder materialelastisch ausgebildete Wand (Begrenzungswand) des Kanals oder Gehäuses ausgebildet ist, vorzugsweise quer zu einer Längsrichtung des Kanals oder Gehäuses federnd und/oder materialelastisch ausgebildet ist. Eine solche federnde oder materialelastisch ausgebildete Kanalwand oder Gehäusewand lässt sich einfach durch geometrische Auslegung bei entsprechender Materialauswahl ausbilden, etwa durch eine entsprechend dünne Wand aus flexiblem Kunststoff.

Eine damit sehr gut zusammenwirkende Weiterbildung der Erfindung besteht darin, dass das Verriegelungselement für eine Anbringung im Wesentlichen senkrecht zu und zwischen den Kanal- oder Gehäusewänden vorgesehen ist und die dritte Verbindung über beidseitig den gegenüberliegenden Kanal- oder Gehäusewänden zugewandte Verbindungseinrichtungen erfolgt, mit denen die gegenüberliegenden Kanal- oder Gehäusewände formschlüssig und in einem festen Abstand über das Verriegelungselement verbindbar und so in ihrer quer zur Erstreckung des Kanals oder Gehäuses federnden oder materialelastischen Eigenschaft blockierbar sind. Das Verriegelungselement bildet dann die weiter unten noch beschriebene stabile Brücke zwischen den Kanal- bzw. Gehäusewänden und fixiert damit deren Querschnitt.

Eine weitere Ausbildung der Erfindung besteht darin, dass die zweite Verbindung, also die Verbindung zwischen dem Verriegelungselement und der/dem benachbarten Anschlusseinrichtung oder Geräteeinsatz, ein am Verriegelungselement vorgesehenes und mit komplementär ausgebildeten Bereichen der jeweiligen Anschlusseinrichtung oder des Geräteeinsatzes federnd oder materialelastisch zusammenwirkendes Schnapp- oder Rastverbindungselement aufweist. An dieser Stelle, also als Verbindung zwischen Verriegelungselement und Geräteeinsatz, lässt sich eine solche Schnapp oder Rastverbindungselement problemlos einsetzen, da hier nicht befürchtet werden muss, dass äußere Krafteinwirkungen die inneren Verbindungen zwischen Elementen im Kanal oder im Gehäuse beeinflussen.

Eine Weiterbildung der Erfindung besteht darin, dass mehrere nebeneinander angeordnete Anschlusseinrichtungen oder Geräteeinsätze in einer Längsrichtung des Kanals oder Gehäuses nebeneinander angeordnet und über jeweils zwischen ihnen angeordneten Verriegelungselemente rastend miteinander verbindbar sind. Auf diese Weise lassen sich mehrere solche Anschlusseinrichtungen oder Geräteeinsätze mit jeweils zwischen ihnen angeordneten Verriegelungselementen sicher fixieren. Ein zwischen zwei Anschlusseinrichtungen oder Geräteeinsätzen liegendes Verriegelungselement fixiert dann diese beiden Anschlusseinrichtungen oder Geräteeinsätze, während ein an einem freien Ende einer Anschlusseinrichtung oder eines Geräteeinsatzes nur diese bzw. diesen fixiert.

Eine weitere Ausbildung der Erfindung besteht darin, dass das Verriegelungselement Einrichtungen zur elektrischen oder elektronischen Kontaktierung der Anschlusseinrichtungen oder Geräteeinsätze untereinander und/oder zur Kontaktierung von Steckverbindungen aufweist, vorzugsweise ausgebildet als Stecker- und Buchsen-Kontakte. Insbesondere im Zusammenwirken mit einer weiteren Ausbildung, die darin besteht, dass die Einrichtungen zur elektrischen oder elektronischen Kontaktierung zusammen mit dem Schnapp- oder Rastverbindungselement der zweiten Verbindung aktivierbar sind, entsteht hier eine einfach zu realisierende Verbindung zwischen den Anschlusselementen oder Geräteeinsätze, die gleichzeitig für eine elektrische Kontaktierung sorgt und somit zusätzliche Verkabelungsarbeiten vereinfacht oder sogar überflüssig werden lässt.

Eine Weiterbildung der Erfindung besteht darin, dass die Anschlusseinrichtungen oder Geräteeinsätze und das Verriegelungselement durch zu einer Bedienungsseite geöffnete Ausnehmungen in den Kanal oder das Gehäuses einsetzbar und dort fixierbar sind, vorzugsweise durch eine Öffnung in der Oberseite des Kanals oder des Gehäuses. Mit einer solchen Ausbildung wird also das Verriegelungselement im Wesentlichen gleichzeitig mit der Anschlusseinrichtungen oder dem Geräteeinsatz in den Kanal oder in das Gehäuse eingesetzt. So können etwa mehrere Anschlusseinrichtungen mit Verriegelungselementen zunächst außerhalb des Kanals zusammengefügt und dann über die Öffnung eingesetzt werden.

Bei Nutzung der Weiterbildung mit Einrichtungen zur elektrischen oder elektronischen Kontaktierung ist damit sogar ohne weitere Verkabelungsarbeiten bereits eine elektrische Verbindung zwischen den einzelnen Anschlusseinrichtungen oder Geräteeinsätzen erstellt.

Bei einer solchen Ausbildung, bei der die Anschlusseinrichtungen oder Geräteeinsätze zusammen mit dem Verriegelungselement in den Kanal oder in das Gehäuse eingesetzt werden, besteht eine weitere, die Montage vereinfachende Ausbildung darin, dass das Verriegelungselement ebenfalls und zusammen mit den Anschlusseinrichtungen oder Geräteeinsätzen im Kanal oder Gehäuses einrastend fixierbar ist und eine als Schnapp- oder Rastverbindung ausgebildete Verbindungseinrichtung ausweist, die mit komplementär federnd oder materialelastisch ausgebildeten Bereichen am Kanal oder Gehäuse zusammenwirkt.

Damit sind sowohl die Anschlusseinrichtungen oder Geräteeinsätze, die mithilfe der ersten Verbindung einrastend fixiert werden können, als auch die Verriegelungselemente als solche mit einer Schnapp- oder Rastverbindung einrastend fixierbar.

Die hierzu erforderlichen Ausbildungen und Formen an den Verriegelungselementen können, wie in einer weiteren Ausbildung der Erfindung beansprucht, dadurch realisiert werden, dass das Verriegelungselement den Wandbereichen des Kanals oder Gehäuses gegenüberliegend vorgesehene Anlaufschrägen aufweist, durch die die Kanal- oder Gehäusewände zum Einsetzen des Verriegelungselements federnd oder materialelastisch verformbar sind, etwa zum Einsetzen des Verriegelungselements auseinandergebogen werden und nach Durchpressen der Anlaufschräge wieder zurückfedern. Bei starren Anlaufschrägen können diese so gestaltet sein, dass sie frei innerhalb des Kanals oder Gehäuses zu liegen kommen, bevor die Verriegelungselemente der ersten Verbindung zusammenwirken.

Eine weitere Ausbildung der Erfindung, bei der das Verriegelungselement im Kanal oder Gehäuse einrastend fixierbar ist und eine als Schnapp- oder Rastverbindung ausgebildete Verbindungseinrichtung aufweist, besteht darin, dass das Verriegelungselement den Wandbereichen des Kanals oder Gehäuses gegenüberliegend vorgesehene federnde Zungen aufweist, die durch das Einsetzen des Verriegelungselements zwischen die Kanal- oder Gehäusewände federnd oder materialelastisch verformbar sind und rückfedernd eine Raste bilden. Eine solche Integration von Fixierung und Rastung vereinfacht die Konstruktion des Verriegelungselements.

Anschlusseinrichtungen oder Geräteeinsätze auf der einen Seite und Verriegelungselemente auf der anderen Seite müssen jedoch nicht immer durch dieselbe Öffnung in die jeweiligen Kanäle oder Gehäuse eingesetzt werden. Dem trägt eine andere Weiterbildung der Erfindung Rechnung, die darin besteht, dass die Anschlusseinrichtungen oder Geräteeinsätze durch zu einer Bedienungsseite geöffnete Ausnehmungen in den Kanal oder das Gehäuses einsetzbar und dort fixierbar sind, wobei das Verriegelungselement durch zu einer Montageseite geöffnete, weitere Ausnehmungen in den Kanal oder das Gehäuses einsetzbar ist, vorzugweise durch einen offenen Kanalquerschnitt oder eine Montageöffnung im Gehäuse.

Bei einer solchen Ausbildung können beispielsweise nach oben geöffnete Kanäle vorgesehen sein, durch die die Anschlusseinrichtungen oder Geräteeinsätze in den Kanälen platziert werden, während die Verriegelungselemente durch den geöffneten Kanalquerschnitt geschoben werden. Dort können sie dann über die zweite Verbindung mit den Anschlusseinrichtungen verbunden werden und gleichzeitig über entsprechend komplementäre Profile an Verriegelungselement und Kanalwand eine abstandsfeste Verbindung der Wände bereitstellen. Es ist jedoch auch möglich, dass die mit den Verriegelungselementen versehenen Anschlusseinrichtungen oder Geräteeinsätze als Ganzes durch den geöffneten Kanalquerschnitt geschoben werden.

Eine weitere Ausbildung der Erfindung besteht darin, dass die die Anschlusseinrichtungen oder Geräteeinsätze zu einer Bedienungsseite einen Deckel oder eine Deckfläche aufweisen, durch welche das benachbart zur den Anschlusseinrichtungen oder Geräteeinsätzen angeordnete Verriegelungselement mindestens teilweise überdeckt wird. So können Deckel oder Deckfläche so ausgebildet sein, dass sie in einer Kanal-Längsrichtung auf beiden Seiten einer Anschlusseinrichtung oder eines Geräteeinsatzes mit einem Maß überstehen, das etwa der halben Breite eines Verriegelungselements entspricht, wobei als Breite hier die Ausdehnung des Verriegelungselements in Längsrichtung des Kanals verstanden wird.

Durch diese Ausbildung sind die in den Kanälen vorgesehenen Verriegelungselement von außen, also von der Kanaloberseite unsichtbar und können z. B. beliebig eingefärbt werden, ohne den Gesamteindruck zu stören.

Das erfindungsgemäße Installations- und Verteilersystems kann als Brüstung- oder Wandsystem ausgebildet sein, aber auch als Auf-Tisch-System für Möbel, vorzugsweise als Auf-Tisch-Steckdosenleiste. Durch die Anordnung von Anschlusseinrichtungen oder Geräteeinsätzen in Kanälen oder Gehäusen, die in erfindungsgemäßer Weise mit Verriegelungselementen zusammenwirken, welche die Anschlusseinrichtungen oder Geräteeinsätze dadurch fixieren, dass die zu deren Einsatz in die Kanäle ausgebildete Rast- oder Schnappverbindung nach dem Einsetzen blockiert ist, lassen sich die Kanäle oder Gehäuse auf einfachste Art an dem vorgesehenen Untergrund befestigen und können danach mit Anschlusseinrichtungen oder Geräteeinsätzen bestückt werden, die auch bei starken von außen einwirkenden Kräften nicht wieder unabsichtlich gelöst werden können.

Die Erfindung betrifft weiterhin eine Verriegelungselement als Untersystem des Installations- und Verteilersystems, wobei das Verriegelungselement mit dem Installations- und Verteilersystem so in Beziehung steht, dass beide sich ergänzen und zusammenwirken. Deutlich wird dies zum Beispiel dadurch, dass das Verriegelungselement mindestens eine (dritte) Verbindung bereitstellt, bei der komplementär zum Verriegelungselement ausgebildete Bereiche des zum Installations- und Verteilersystem gehörigen Kanals oder Gehäuses formschlüssig so zusammenwirken, dass eine Verriegelung der bereits positionierten Anschlusseinrichtungen oder Geräteeinsätzen (erste Verbindung) erfolgt.

Dabei ist das Verriegelungselement zur Lösung der Aufgabe der Erfindung als im Wesentlichen flächiges Element ausgebildet, welches an mindestens einer Stirnseite einer Anschlusseinrichtung oder eines Geräteeinsatzes vorgesehen ist, die bzw. der in einen Kanal oder Gehäuse des Installationssystems einsetzbar ist, wobei das Verriegelungselement sich an den stirnseitigen Querschnitt der Anschlusseinrichtung oder des Geräteeinsatzes angepasst quer zu einer Längsrichtung des Kanals oder Gehäuses sowie zwischen den in Längsrichtung orientierten Wänden des Kanals oder Gehäuses erstreckt.

Das Verriegelungselement weist dabei einerseits sich in Längsrichtung des Kanals oder Gehäuses erstreckende Einrichtungen zur Verbindung mit jeweils mindestens einer Anschlusseinrichtung oder einem Geräteeinsatz auf und andererseits im Wesentlichen quer zur Längsrichtung und zwischen den Wänden des Kanals oder Gehäuses sich erstreckende, beidseitig den gegenüberliegenden Kanal- oder Gehäusewänden zugewandte und mit letzteren zusammenwirkende Einrichtungen zur Verbindung mit den Wänden des Kanals oder Gehäuses.

Der Begriff "im Wesentlichen flächiges Element" bedeutet hier, dass die Breite, d.h. die Ausdehnung des Verriegelungselements in Längsrichtung des Kanals wesentlich kleiner ist als der Abstand zwischen den Kanal- oder den Gehäusewänden, wobei die flächige Ausdehnung des Verriegelungselement quer zur Längsrichtung der Kanal- oder Gehäusewände an den stirnseitigen Querschnitt der Anschlusseinrichtung oder des Geräteeinsatzes angepasst ist. Nur auf diese Weise nämlich lassen sich mehrere Anschlusseinrichtungen und Geräteeinsätze nebeneinander zu Baugruppen zusammenfassen und mit im Verriegelungselement ausgebildeten Steckern elektrisch kontaktieren, wie weiter unten noch einmal dargestellt.

In einer Ausführung des Verriegelungselements ist die Einrichtung zur Verbindung mit jeweils mindestens einer Anschlusseinrichtung oder einem Geräteeinsatz als Schnapp- oder Rastverbindung ausgebildet ist, die mit komplementär ausgebildeten Bereichen der jeweiligen Anschlusseinrichtung oder des Geräteeinsatzes federnd oder materialelastisch zusammenwirkt. Damit sind, wie oben bereits dargestellt, auch mehrere nebeneinander angeordnete Anschlusseinrichtungen oder Geräteeinsätze in einer Längsrichtung des Kanals oder Gehäuses einfach nebeneinander anzuordnen, zu montieren und zu verbinden. Ein Verriegelungselement fixiert dann zwei Anschlusseinrichtungen oder Geräteeinsätze. Wie oben bereits erwähnt, ist bei dieser Verbindung ein einfaches Schnapp- oder Rastverbindungselement problemlos einsetzbar, da hier äußere Krafteinwirkungen kaum Auswirkungen haben.

Eine Weiterbildung der auf das Verriegelungselement gerichteten Erfindung besteht darin, dass die Einrichtung zur Verbindung mit den Wänden des Kanals oder Gehäuses als formschlüssige Verbindung so ausgebildet ist, dass durch das Verriegelungselement eine die Wände verbindende abstandsfeste Brücke zwischen den Wänden entsteht.

Eine abstandsfeste Brücke zwischen den Wänden lässt sich durch eine einfach herzustellende Weiterbildung des erfindungsgemäßen Verriegelungselements erreichen, die darin besteht, dass die Verbindungseinrichtung zur Verbindung mit den Wänden des Kanals oder Gehäuses als beidseitig den gegenüberliegenden Kanal- oder Gehäusewänden zugewandter hakenförmiger Vorsprung ausgebildet ist, welcher einen jeweils komplementär dazu ausgebildeten Vorsprung im Wandbereich des Kanals oder Gehäuses formschlüssig hintergreift.

Dazu eignet sich in besonderer Weise eine weitere Ausbildung der Erfindung, die darin besteht, dass der hakenförmige Vorsprung von der Bedienungs- oder Einschubseite aus gesehen nach unten geöffnet ausgebildet ist und der komplementär dazu ausgebildeten Vorsprung im Wandbereich des Kanals oder Gehäuses entgegengesetzt dazu nach oben geöffnet ist.

Die Ausbildung solcherart ineinandergreifender Vorsprünge ist insbesondere für eine Ausbildung des Installations- und Verteilungssystem geeignet, bei dem, wie bereits beschrieben, die Anschlusseinrichtungen oder Geräteeinsätze und auch bzw. gleichzeitig das Verriegelungselement durch eine bedienungsseitige Öffnung, in der Regel von oben, eingesetzt werden.

In einer weiteren Ausbildung weist das Verriegelungselement eine im Kanal oder Gehäuses einrastend fixierbare und als Schnapp- oder Rastverbindung ausgebildete Verbindungseinrichtung auf, die federnd oder materialelastisch verformbar mit komplementär federnd oder materialelastisch ausgebildeten Bereichen am Kanal oder Gehäuse zusammenwirkt. Dadurch ergibt sich eine sehr einfache Montage des Verriegelungselements.

Konstruktiv einfach gestaltet sich eine solche Ausbildung dadurch, dass den Wandbereichen des Kanals oder Gehäuses gegenüberliegend vorgesehene Anlaufschrägen vorgesehen sind, durch die die Kanal- oder Gehäusewände zum Einsetzen des Verriegelungselements federnd oder materialelastisch verformbar sind. Das gilt gleichermaßen für eine Ausführung eines Verriegelungselements, bei dem den Wandbereichen des Kanals oder Gehäuses gegenüberliegend vorgesehene federnde Zungen vorgesehen sind, die nach dem Einsetzen des Verriegelungselements rückfedernd eine Raste bilden.

Eine andere Ausbildung der der auf das Verriegelungselement gerichteten Erfindung, mit der eine abstandsfeste Brücke zwischen den Wänden auf einfache Weise erreicht werden kann, besteht darin, dass die Verbindungseinrichtung zur Verbindung mit den Wänden des Kanals oder Gehäuses als beidseitig am Verriegelungselement vorgesehene und den gegenüberliegenden Kanal- oder Gehäusewänden zugewandte vorspringende Nut oder Feder ausgebildet ist, in welche eine komplementär dazu ausgebildeten und im Wandbereich des Kanals oder Gehäuses angeordnete Feder oder Nut eingreift.

Eine besonders sichere Verbindung entsteht mit einer Weiterbildung der Erfindung, bei der die Nut C-förmig konkav so ausgebildet ist, dass sie eine T-förmige Feder umschließt.

Diese Ausbildung des Verriegelungselements mit Feder und Nut ist insbesondere für ein Installations- und Verteilungssystem geeignet, bei dem die Anschlusseinrichtungen oder Geräteeinsätze durch zu einer Bedienungsseite geöffnete Ausnehmungen von oben in den Kanal oder das Gehäuses eingesetzt werden, während die Verriegelungselemente durch den offenen Kanalquerschnitt z.B. von der Seite eingesetzt werden, wie oben bereits dargestellt.

In einer Weiterbildung des Verriegelungselements sind in einer Längsrichtung des Kanals oder Gehäuses ausgerichtete und zugängliche Einrichtungen zur elektrischen oder elektronischen Kontaktierung der Anschlusseinrichtungen oder Geräteeinsätze und/oder zur Kontaktierung von elektrischen Leitungen zur Energieversorgung oder Datenübermittlung vorgesehen. Eine sehr einfache Montage erreicht man im Zusammenwirken mit einer weiteren Ausbildung der Erfindung, bei der die Einrichtungen zur Kontaktierung als in Längsrichtung des Kanals oder Gehäuses vorspringende Stecker oder Stifte ausgebildet sind, die in komplementär ausgebildete Buchsen-Kontakte der Anschlusseinrichtungen oder Geräteeinsätze eingreifen. Durch ein an einer Stelle einer Reihe von Anschlusseinrichtungen oder Geräteeinsätzen vorgesehenes Verriegelungselement ohne elektrische Kontaktierungen kann so ein Anschluss der beidseitig davon liegenden Anschlusseinrichtungen oder Geräteeinsätze an unterschiedliche Stromversorgungen erfolgen. Eventuelle weitere Anschlusseinrichtungen oder Geräteeinsätze sind dann mittels Verriegelungselementen mit elektrischen Kontaktierungen anschließbar.

Im Folgenden wird die Erfindung mit Bezugnahme auf die in den Figuren der Zeichnung gezeigten beispielhaften Ausführungen beschrieben. Es zeigen
- Fig. 1: einen Abschnitt eines zu einem erfindungsgemäßen Installations- und Verteilungssystem gehörigen Doppelkanals in perspektivische Darstellung,
- Fig. 2: einen Doppelkanal gemäß Fig. 1, jedoch mit in den linken Kanal eingesetzten Anschlusseinrichtungen / Steckdosen,
- Fig. 3: den Doppelkanal gemäß Fig. 2 mit in den linken Kanal eingesetzten Anschlusseinrichtungen / Steckdosen, jedoch mit Einrichtungen zur elektrischen oder elektronischen Kontaktierung der Steckdosen untereinander,
- Fig. 4: ein einzelnes, etwas vergrößert dargestelltes Verriegelungselement in einer perspektivischen Ansicht,
- Fig. 5: eine Steckdose und ein Verriegelungselement vor dem Zusammenbau, d. h. vor dem Fertigstellen der als Schnapp- oder Rastverbindung ausgebildeten zweiten Verbindung,
- Fig. 6: die in den Fig.2 und 3 dargestellte Anordnung zweier Steckdosen nebeneinander vor ihrem Einsatz in den Kanal, in einer Ansicht von der Seite,
- Fig. 7: eine weitere Ausführung eines Verriegelungselements in einem Kanal eines Installations- und Verteilersystems.
- Fig. 8: eine wiederum andere Ausführung eines Verriegelungselements in einem Kanal eines Installations- und Verteilersystems.

In den Figuren können gleiche oder ähnliche Elemente mit denselben Bezugszeichen referenziert sein. Zur Verdeutlichung der Erfindung ist es vorteilhaft, die Figuren in der Zusammenschau zu betrachten.

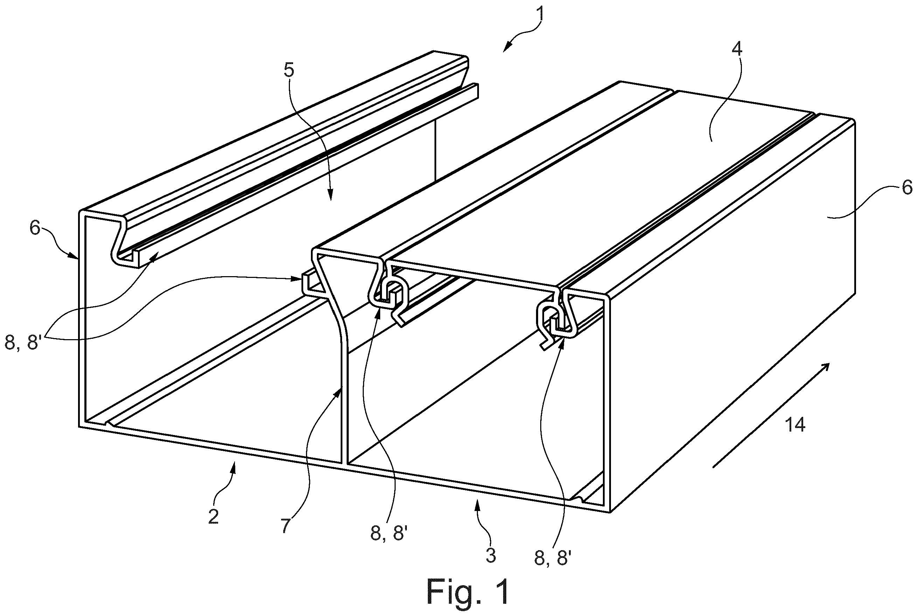

Fig. 1 zeigt zunächst einen Abschnitt eines zu einem Installations- und Verteilungssystem gehörigen Doppelkanals 1 in perspektivische Darstellung, bei dem zwei parallel zueinander verlaufende Kanäle vorgesehen sind, nämlich ein linker Kanal 2 und ein rechter Kanal 3.

Der rechte Kanal 3 ist dabei mit einem Deckel 4 abgedeckt und kann zu einem späteren Zeitpunkt mit Anschlusseinrichtungen oder Geräteeinsätzen versehen werden, wozu der Deckel dann entfernt wird. Der linke Kanal 2 ist ohne Deckel dargestellt und weist auf seiner Oberseite, der Bedienungsseite, eine nicht durch einen Deckel abgedeckte Ausnehmung 5, 27 auf, durch die Anschlusseinrichtungen oder Geräteeinsätze 9, 10 in den jeweiligen Kanal eingesetzt werden können. Als Bedienungsseite ist hierbei die obere Seite des Doppelkanals bezeichnet, von der aus die dort eingesetzten Anschlusseinrichtungen und Geräteeinsätze bedient bzw. betätigt werden können, bei einer als Steckdose 9 ausgebildeten Anschlusseinrichtung also die Seite, von der aus ein Stecker in die Steckdose eingesetzt werden kann.

Beide Kanäle 2, 3 sind mit in Blickrichtung vorn und hinten offenem Querschnitt dargestellt. Auch dieser offene Querschnitt ist dazu geeignet,
Anschlusseinrichtungen oder Geräteeinsätze in den jeweiligen Kanal einzusetzen, wie weiter unten noch beschrieben wird.

Die beiden Kanäle 2, 3 sind im oberen Bereich der Seitenwände 6 und der Mittelwand 7 mit beidseitig an den Innenwänden sich in Längsrichtung 14 der Kanäle 2, 3 erstreckenden Profilstrukturen 8 versehen, welche im Querschnitt gesehen jeweils einen nach oben geöffneten hakenförmigen Vorsprung 8' ausbilden. Der auf dem rechten Kanal 3 aufgesetzte Deckel 4 weist ein zu den hakenförmigen Vorsprüngen 8, 8' komplementär ausgebildetes Profil aus und rastet damit lösbar in die Kanaloberseite ein.

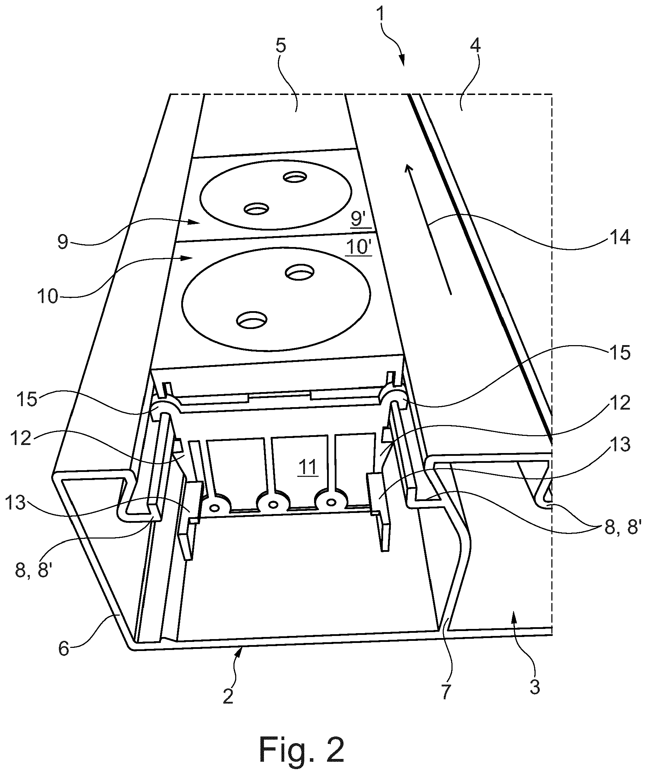

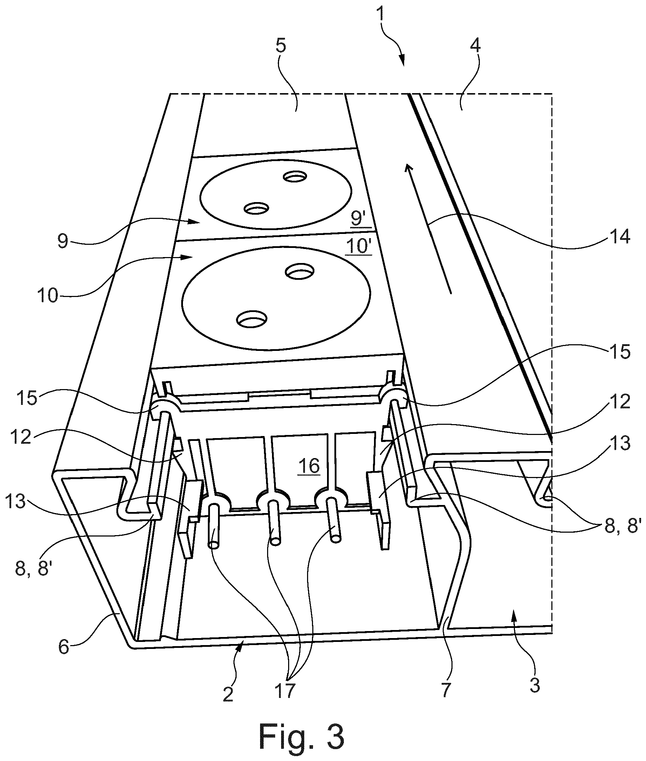

Fig. 2 und 3 sind bis auf das Merkmal der elektrischen Kontaktierung der Anschlusseinrichtungen untereinander, das nur in Fig. 3 dargestellt ist, identische Zeichnungen. Insoweit gilt die nachfolgende Beschreibung mit Bezug auf die Fig.2 ebenso für die Fig. 3, insbesondere in Bezug auf das Verriegelungselement 11, welches bis auf die elektrische Kontaktierung durch Stecker 17 identisch mit dem Verriegelungselement 16 ist.

Fig. 2 zeigt den in Fig. 1 dargestellten Doppelkanal 1, jedoch bereits mit in den linken Kanal 2 eingesetzten Anschlusseinrichtungen 9, 10, hier in Form von nebeneinander positionierten Steckdosen 9, 10.

Die dem Betrachter zugewandte, vordere Stirnseite der Steckdose 10 wird in der Darstellung der Fig. 2 durch ein separates Verriegelungselement 11 verdeckt, welches der Steckdose 10 direkt benachbart angeordnet und mit letzterer verbunden ist. Das an der Stirnseite einer Steckdose 10 angeordnete Verriegelungselement 11 ist als im Wesentlichen flächiges Element ausgebildet, an den stirnseitigen Querschnitt der Steckdose 10 angepasst und erstreckt sich quer zur Längsrichtung 14 des Kanals 2, nämlich senkrecht zu und zwischen den in Längsrichtung 14 orientierten Wänden 6 (Seitenwand) und 7 (Mittelwand).

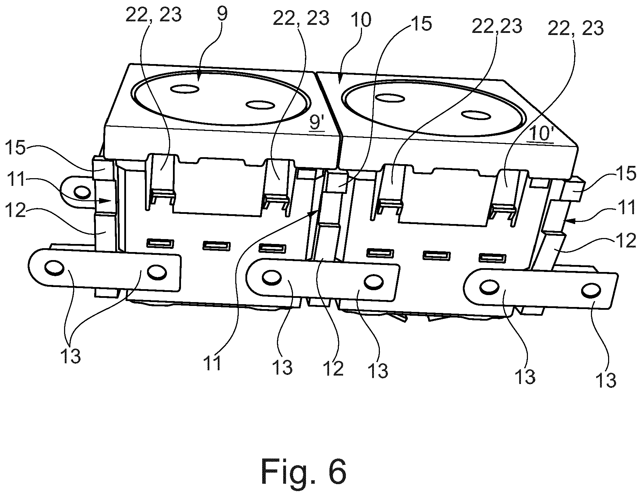

Ein weiteres solches Verriegelungselement ist zwischen den beiden Steckdosen 9 und 10 angeordnet, allerdings in den Fig. 2 und 3 nicht sichtbar, da die beiden an der Oberseite der Steckdosen vorgesehenen Deckel 9', 10' bzw. Deckflächen ein zwischen beiden Steckdosen 9 und 10 angeordnete Verriegelungselement jeweils hälftig an seiner Oberseite überdecken. Diese Überdeckung und die Anordnung des weiteren Verriegelungselements zwischen den beiden Steckdosen ist in Fig. 6 detaillierter dargestellt.

Die als Steckdosen ausgebildeten Anschlusseinrichtungen 9 und 10 und auch das Verriegelungselement 11 sind durch die Ausnehmung 5 in der Oberseite des Kanals 2 in den Kanal einsetzbar und werden dort einrastend fixiert.

Die einrastende Fixierung der Steckdosen 9, 10 und des Verriegelungselements 11 erfolgt durch eine erste Verbindung, die als Schnapp- oder Rastverbindung ausgebildet ist. Diese Schnapp- oder Rastverbindung wird dadurch bereitgestellt, dass komplementär federnd und materialelastisch ausgebildete Bereiche an den Steckdosen 9, 10 und am Kanal oder Gehäuses zusammenwirken.

Das gilt bei dieser Ausführung ebenso für das Einsetzen des Verriegelungselements 11, wobei dann Bereiche am Verriegelungselement 11 und federnd und/oder materialelastisch ausgebildete Bereiche am Kanal 2 zusammenwirken.

Die jeweils zusammenwirkenden Bereiche an beiden Elementen können dabei unterschiedlich stark ausgebildete federnde oder materialelastische Eigenschaften besitzen.

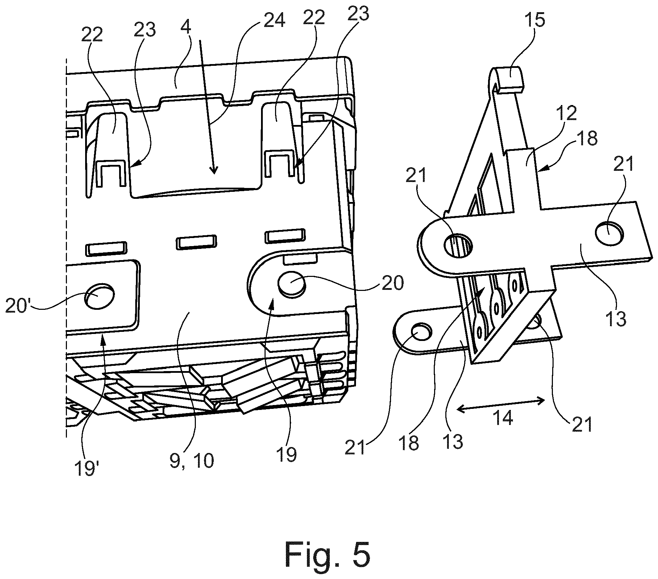

In Bezug auf die als Schnapp- oder Rastverbindung ausgebildete erste Verbindung der Anschlusseinrichtungen 9 und 10 mit bzw. in dem Kanal 2 ist hier die erste Verbindung so aufgebaut, dass ein zugehöriger federnder und materialelastischer Bereich an der Steckdose 9, 10 als federnde und materialelastische Zunge 22 und/oder Raste 23 ausgebildet ist, wie weiter unten in der Beschreibung der Fig. 5 näher erläutert.

Der jeweils zugehörige komplementär federnd und/oder materialelastisch ausgebildete Bereich am Kanal 2 wird dadurch bereitgestellt, dass die Wände des Kanals, also die Seitenwand 6 und die Mittelwand 7, als solche bereits federnd und materialelastisch ausgebildet sind und somit in geringem Maße zur Vergrößerung der Ausnehmung 5 auf der Oberseite des Kanals 2 "aufgebogen" werden können, also quer zu einer Längsrichtung 14 des Kanals 2 federnd und materialelastisch ausgebildet sind. Dabei wird, wenn in dem benachbarten Kanal 3 der Deckel 4 eingesetzt ist oder auch bereits weitere Steckdosen platziert wären, die Außenwand 6 natürlich mehr aufgebogen als die Mittelwand 7.

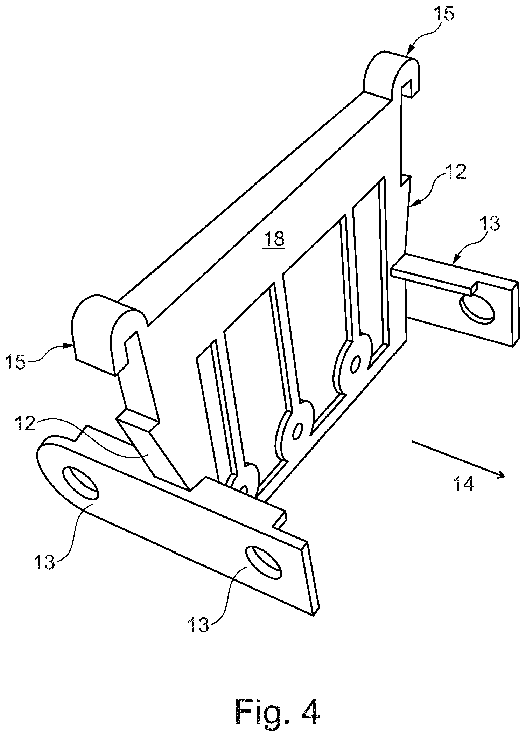

Bei dieser Ausführung, bei der auch das Verriegelungselement 11 gleichzeitig mit der Steckdose durch die Ausnehmung 5 in den Kanal 2 eingesetzt wird und dort einrastet, besitzt das Verriegelungselement 11 den Wandbereichen bzw. Wänden 6, 7 des Kanals gegenüberliegend vorgesehene Anlaufschrägen 12, durch die die Kanal- oder Gehäusewände zum Einsetzen des Verriegelungselements federnd und materialelastisch verformbar sind, nämlich zum Einsetzen von oben aufgebogen werden. Die diesbezügliche Ausbildung des Verriegelungselements 11 ist in der Fig. 4 noch einmal detaillierter dargestellt.

Das separate, an den Stirnseiten der Steckdosen vorgesehene Verriegelungselement 11 ist über eine zweite Verbindung mit der Steckdose 9 verbunden, welche ebenfalls als Schnapp- oder Rastverbindung ausgebildet ist. Das gilt auch für das Verriegelungselement 16 der Fig. 3. Dazu weist das Verriegelungselement 11, 16 Verbindungseinrichtungen 13 auf, nämlich federnd und materialelastisch ausgebildete Schnapp- oder Rastverbindungselemente 13, welche mit dazu komplementär ausgebildeten Bereichen der jeweiligen Anschlusseinrichtung, hier der Steckdose 9 federnd und materialelastisch zusammenwirken. Die Schnapp- oder Rastverbindungselemente 13 des Verriegelungselements 11, 16 erstrecken sich bei dieser Ausführung in Längsrichtung 14 des Kanals 2, 3 und wirken zusammen mit komplementär an beiden Längsseiten der Steckdose 9 ausgebildeten Bereichen. In der Zusammenschau mit der Fig. 4 und 5, in der die Schnapp- oder Rastverbindungselemente 13 noch einmal detaillierter dargestellt sind, erschließt sich ihre Ausbildung und Anordnung noch einmal deutlicher.

Mithilfe der Schnapp- oder Rastverbindungselemente 13 können, wie in Fig. 2 und 3 ersichtlich, mehrere nebeneinander angeordnete Anschlusseinrichtungen, hier die Steckdosen 9 und 10, in Längsrichtung 14 des Kanals oder Gehäuses nebeneinander angeordnet und einrastend miteinander verbunden werden.

Das Verriegelungselement 11, ebenso wie das Verriegelungselement 16 der Fig. 3, stellt darüber hinaus eine dritte Verbindung bereit, bei der komplementär zu Verbindungseinrichtungen 15 am Verriegelungselement 11, 16 ausgebildete Verbindungseinrichtungen 8' des Kanals 2, 3 formschlüssig so zusammenwirken, dass eine Verriegelung der ersten Verbindung erfolgt. In diesem Fall geschieht dies dadurch, dass die Wände des Kanals 2, also die Seitenwand 6 und die Mittelwand 7 in ihrer oben genannten komplementär federnd und materialelastischen Eigenschaft blockiert werden und somit nach dem Einsetzen der Steckdosen 9, 10 mitsamt den sie verbindenden Verriegelungselementen 11 oder 16 nicht mehr wieder "aufgebogen" werden können.

Dazu ist das Installations- und Verteilersystem so ausgebildet, dass, wie oben bereits beschrieben, das Verriegelungselement 11, 16 im Wesentlichen senkrecht zu und zwischen den Kanalwänden 6, 7 vorgesehen, so dass die dritte Verbindung über beidseitig den gegenüberliegenden Kanalwänden 6, 7 zugewandte Verbindungseinrichtungen 15 realisiert wird, mit denen die Kanalwände 6, 7 formschlüssig und abstandfest über das Verriegelungselement 11, 16 verbunden und so in ihrer quer zur Erstreckung des Kanals 2 federnden oder materialelastischen Eigenschaft blockiert sind.

Wie in den Fig. 2 und 3 erkennbar, sind die Verbindungseinrichtungen 15 als beidseitig den gegenüberliegenden Kanalwänden 6, 7 zugewandte und nach unten geöffnete, hakenförmige Vorsprünge ausgebildet. Beim Einsetzen des Verriegelungselements hintergreifen diese hakenförmigen Vorsprünge formschlüssig die jeweils komplementär dazu ausgebildeten nach oben geöffneten hakenförmigen Vorsprünge 8' an den Innenwänden der Kanäle 2, 3, die an den sich in Längsrichtung 14 erstreckenden Profilstrukturen 8 vorgesehen sind.

Fig. 2 und 3 unterscheiden sich in einem Merkmal, wie oben bereits erwähnt. Das in Fig. 3 dargestellte Verriegelungselement 16 weist im Gegensatz zum Verriegelungselement 11 (Fig. 2) nämlich Einrichtungen zur elektrischen oder elektronischen Kontaktierung der Steckdosen untereinander auf, hier Stecker 17, die vor dem Einsatz in den Kanal 2 in komplementäre Buchsen eingesteckt werden, die an den Steckdosen 9, 10 ausgebildet, hier jedoch nicht näher dargestellt sind. Stecker-Buschen-Verbindungen an sich sind hinlänglich bekannt und bilden eine einfachen zu montierende Steckverbindung.

Ebenfalls möglich wäre es, etwa in Form einer funktionalen Umkehr, die Verriegelungselemente anstelle mit Stiften mit Bohrungen zu versehen, durch welche an jeweils einer ersten Seite einer Steckdose angeordnete Stifte zur elektrischen Kontaktierung durchgesteckt und mit einer Buchse verbunden werden, die an der gegenüberliegenden anderen, zweiten Seite einer benachbarten Steckdose vorgesehenen ist. In einer solchen Ausbildung würde jede Anschlusseinrichtung / Steckdose eine Stirnseite mit Steckern und eine Stirnseite mit Buchsen aufweisen.

Fig. 4 zeigt ein einzelnes, etwas vergrößert dargestelltes Verriegelungselement 11 - ohne Stecker oder Stifte zur elektrischen Kontaktierung - in einer perspektivischen Ansicht. Deutlich erkennbar sind die bereits erwähnten federnd und materialelastisch ausgebildeten Schnapp- oder Rastverbindungselemente 13. Die Schnapp- oder Rastverbindungselemente 13 erstrecken sich auf beiden Seiten des Verriegelungselements 11 ausgehend von dessen Stirnseiten 18 in Längsrichtung 14 der Kanäle 2, 3 und wirken zusammen mit komplementär an beiden Längsseiten der Steckdosen 9, 10 ausgebildeten Bereichen. In Fig. 4 auch gut erkennbar sind die für die dritte Verbindung vorgesehenen Verbindungseinrichtungen 15, mit denen die Kanalwände 6, 7 formschlüssig und abstandfest verbunden werden und auch die den Wänden 6, 7 des Kanals gegenüberliegend am Verrieglungselement vorgesehenen Anlaufschrägen 12.

Fig. 5 zeigt eine Steckdose 9 und ein Verriegelungselement 11 vor dem Zusammenbau, d. h. vor dem Fertigstellen der als Schnapp- oder Rastverbindung ausgebildeten zweiten Verbindung. Deutlich erkennbar sind auch hier die zu dieser zweiten Verbindung gehörigen federnd und materialelastisch ausgebildeten Schnapp- oder Rastverbindungselemente 13, die sich ausgehend von den Stirnseiten 18 des Verriegelungselements 11 vor- und rückseitig in Längsrichtung 14 des Kanals erstrecken. Die Schnapp- oder Rastverbindungselemente 13 sind dabei an ihren den Stirnseiten 18 entfernt liegenden Enden mit unterschiedlichen Formen ausgebildet, sodass sie nur auf eine Weise mit den entsprechenden komplementär ausgebildeten Formen der Steckdosen 9, 10 in Verbindung gebracht werden können.

Ebenfalls erkennbar sind die zur zweiten Schnapp- oder Rastverbindung gehörigen komplementär ausgebildeten Bereiche 19, 19' der jeweiligen Anschlusseinrichtung, hier der Steckdose 9, die mit dem federnd und materialelastisch ausgebildeten Schnapp- oder Rastverbindungselement 13 zusammenwirken. Die komplementär ausgebildeten Bereiche 19, 19' umfassen dabei jeweils eine Nocke 20, 20', die beim Zusammenbau in einer Öffnung 21 eines jeweiligen Schnapp- oder Rastverbindungselements 13 einrasten. Die Nocken 20, 20' sind dazu mit einer leichten Anschrägung entgegen der Montagerichtung des Verriegelungselements versehen.

Fig. 5 zeigt auch den zur ersten Verbindung zugehörigen federnden und materialelastischen Bereich an der Steckdose 9, 10, der hier als federnde und materialelastische Zunge 22 ausgebildet ist. Die Zunge 22 und die federnd und materialelastisch ausgebildeten Wände 6, 7 des Kanals wirken dabei im Sinne der ersten Verbindung zusammen, wobei die Zunge 22 in ihrem unteren Bereich eine mit einer Anlaufschräge versehene Raste 23 aufweist. Mit dieser Raste 23 werden beim Einsatz der Steckdose 9, 10 in Einschubrichtung 24 die Wände 6, 7 des Kanals elastisch aufgebogen werden und auch die Zunge 22 selbst federnd auf die Längsseite der Steckdose 9, 10 zubewegt, bis die Raste 23 hinter bzw. unter die Profilstruktur 8 gerät und dort zurückfedert, einrastet und damit die erste Verbindung bewirkt.

Fig. 6 zeigt die bereits in den Fig.2 und 3 dargestellte Anordnung zweier Steckdosen 9,10 nebeneinander in einer Ansicht von der Seite, jedoch vor ihrem Einsatz in den Kanal 2.

Deutlich erkennbar sind hier die an den Stirnseiten der Steckdosen 9, 10 bereits eingesetzten Verriegelungselemente 11, die mit den federnd und materialelastisch ausgebildeten Schnapp- oder Rastverbindungselementen 13 mit den Steckdosen 9, 10 verbunden sind. Insbesondere beim mittleren Verriegelungselement 11 ist gut zu erkennen, dass die Deckel oder Abdeckungen 9', 10' der Steckdosen 9, 10 die Oberseite des Verriegelungselements 11 jeweils hälftig überdecken.

Auch hier sieht man noch einmal die Anordnung der federnden materialelastischen Zungen 22 und der zugehörigen Rasten 23 an den Seitenwänden der Steckdosen 9 und 10 sowie die vorspringenden Verbindungseinrichtungen 15, welche die Kanalwände 6, 7 nach Einsatz der Steckdosen 9, 10 abstandsfest und formschlüssig verbinden.

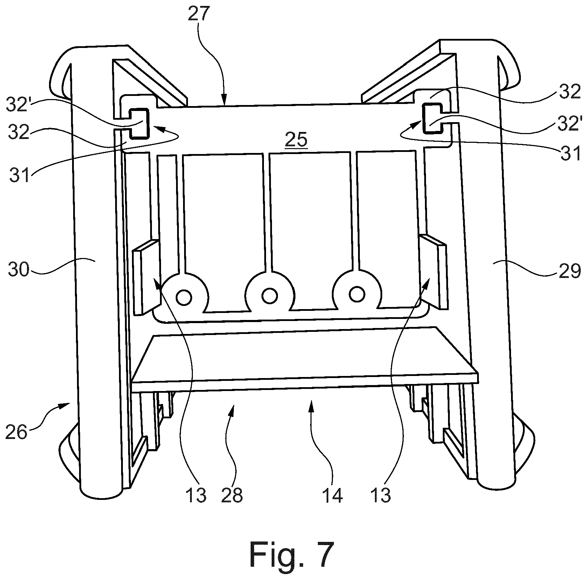

Fig. 7 zeigt eine weitere Ausführung eines Verriegelungselements 25 in einem Kanal 26 eines Installations- und Verteilersystems. Bei dieser Ausführung werden die hier nicht näher dargestellten Anschlusseinrichtungen oder Geräteeinsätze durch zu einer Bedienungsseite geöffnete Ausnehmungen 27 in den Kanal 26 eingesetzt und dort fixiert. Das hier ohne Stecker zur Kontaktierung ausgebildete Verriegelungselement 25 wird bei dieser Ausführung durch den zwischen den Kanalwänden 29 und 30 gebildeten offenen Kanalquerschnitt 28 eingesetzt, d.h. in Längsrichtung 14 des Kanals 26 in den Kanal 26 eingeschoben.

Auch bei dieser Ausführung ist das Verriegelungselement 25 im Wesentlichen senkrecht zu und zwischen den Kanalwänden 29, 30 vorgesehen, so dass die dritte Verbindung über beidseitig den gegenüberliegenden Kanalwänden 29, 30 zugewandte Verbindungseinrichtungen 31 aufgebaut wird, mit denen die Kanalwände 29, 30 formschlüssig und abstandfest über das Verriegelungselement 25 verbunden und so in ihrer federnden oder materialelastischen Eigenschaft blockiert sind. Die Verbindungseinrichtungen 31 bestehen dabei aus beidseitig den gegenüberliegenden Kanalwänden 29, 30 zugewandten, an der Verriegelungseinrichtung 25 vorgesehenen vorspringenden Nuten 32, in welche komplementär dazu ausgebildete und im oberen Wandbereich des Kanals 26 angeordnete Federn 32' eingreifen. Die Nuten 32 sind C-förmig konkav so ausgebildet ist, dass sie eine T-förmige Feder 32' umschließen.

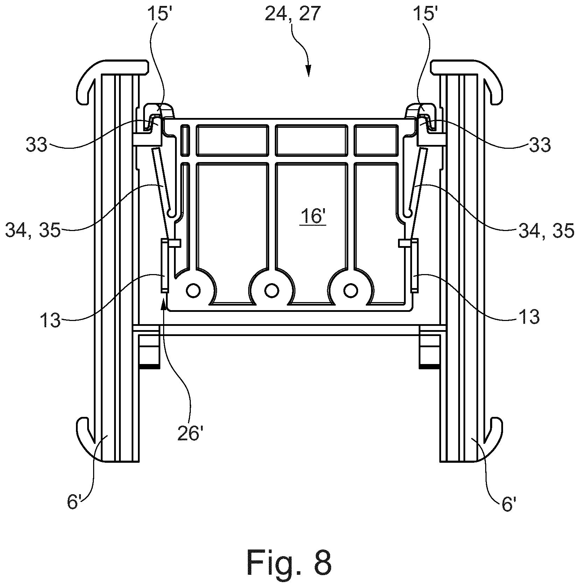

Fig. 8 zeigt eine andere Ausführung eines Verriegelungselements 16' in einem Kanal 26' eines Installations- und Verteilersystems. Bei dieser Ausführung werden sowohl die hier nicht näher dargestellten Anschlusseinrichtungen oder Geräteeinsätze durch die zu einer Bedienungsseite geöffnete Ausnehmungen 27 in den Kanal eingesetzt als auch das jeweilig benachbarte Verriegelungselement 16'.

Das Verriegelungselement 16' weist den Wandbereichen des Kanals 26' oder Gehäuses gegenüberliegend angeordnete federnde Zungen 34 auf, die durch das in Einschubrichtung 24 erfolgende Einsetzen des Verriegelungselements 16' zwischen die Kanal- oder Gehäusewände 6' federnd und/oder materialelastisch verformbar sind und rückfedernd eine Raste 35 bilden.

Dargestellt ist hier die Situation nach dem Einsetzen des Verriegelungselements 16' und nach Rückfedern der Zunge 34 in ihre Ausgangslage, d.h. nach Bildung einer damit entstehenden Raste 35.

Wenn dieser Zustand erreicht ist, sind auch die Verbindungseinrichtungen der dritten Verbindung aktiviert, nämlich die beidseitig den gegenüberliegenden Kanal- oder Gehäusewänden 6' zugewandten hakenförmige Vorsprünge 15', welche die jeweils komplementär dazu ausgebildeten Vorsprünge 33 im Wandbereich des Kanals oder Gehäuses formschlüssig hintergreifen. Die hakenförmige Vorsprünge 15' sind hier von der Bedienungs- oder Einschubseite aus gesehen nach unten geöffnet, während der komplementär dazu ausgebildeten Vorsprung 33 in der Wand 6' des Kanals 26' oder Gehäuses dazu entgegengesetzt hakenförmigen nach oben geöffnet ist.

**Liste der Bezugszeichen (Teil der Beschreibung)**

| | | | |
|---|---|---|---|
| 1 | Doppelkanal eines | 16, 16' | Verriegelungselement |
| | Installations- und | 17 | Einrichtung zur elektrische |
| | Verteilungssystems | | Kontaktierung / Stecker am |
| 2 | linker Kanal | | Verriegelungselement |
| 3 | rechter Kanal | 18 | Stirnseite des |
| 4 | Deckel | | Verriegelungselements |
| 5 | Ausnehmung, bedienungsseitig | 19, 19' | komplementär ausgebildete Bereiche |
| 6 | Seitenwand des Doppelkanals, | 20, 20' | Nocken |
| | federnd und materialelastisch | 21 | Öffnung, Bohrung |
| 6' | Seitenwand des Kanals, | 22 | federnde und |
| | federnd und materialelastisch | | materialelastische Zunge |
| 7 | Mittelwand des Doppelkanals, | 23 | Raste |
| | federnd und materialelastisch | 24 | Einschubrichtung |
| 8 | Profil, Profilstruktur | | (Einsatzrichtung der |
| 8' | Verbindungseinrichtung, | | Steckdose) |
| | hakenförmiger Vorsprung | 25 | Verriegelungselement |
| 9 | Steckdose | 26, 26' | Kanal eines Installations- und |
| | (Anschlusseinrichtung, | | Verteilungssystems |
| | Geräteeinsatz) | 27 | Ausnehmung, |
| 9' | Deckel/ Deckfläche der | | bedienungsseitig |
| | Steckdose 9 | 28 | Kanalquerschnitt |
| 10 | Steckdose | 29 30 | Kanalwand |
| | (Anschlusseinrichtung, | , | |
| | Geräteeinsatz) | 31 | Verbindungseinrichtung (dritte |
| 10' | Deckel/ Deckfläche der | | Verbindung) |
| | Steckdose 10 | 32 | Verbindungseinrichtung, C-förmige Nut |
| 11 | Verriegelungselement | | |
| 12 | Anlaufschräge | 32' | Verbindungseinrichtung, T-förmige Feder |
| 13 | Verbindungseinrichtung, | 33 | |
| | Schnapp- oder | | Verbindungseinrichtung, |
| | Rastverbindungselement | | hakenförmiger Vorsprung |
| | (zweite Verbindung) | 34 | federnde und/oder |
| 14 | Längsrichtung | | materialelastische Zunge |
| 15, 15' | Verbindungseinrichtung, | 35 | Raste |
| | hakenförmiger Vorsprung | | |
| | (dritte Verbindung) | | |

## Patentansprüche

1. Installations- und Verteilersystem, in welchem über Leitungen oder Kontaktierungen verbundene Anschlusseinrichtungen (9, 10) oder Geräteeinsätze innerhalb von Kanälen (1, 2, 3, 26, 26') oder Gehäusen aufnehmbar sind, wobei eine oder mehrere Anschlusseinrichtungen (9, 10) oder Geräteeinsätze durch Öffnungen oder Ausnehmungen (5, 27') in den Kanal (2, 3, 26, 26') oder das Gehäuse einsetzbar und dort mittels mindestens einer ersten Verbindung einrastend fixierbar sind, wobei die erste Verbindung komplementär zusammenwirkende Bereiche (22, 23, 6, 7, 29, 30) an der Anschlusseinrichtung (9, 10) oder am Geräteeinsatz einerseits und am Kanal (2, 3, 26, 26') oder Gehäuse andererseits umfasst, die eine der Einsetzrichtung entgegengesetzte Bewegung einer eingesetzten Anschlusseinrichtung (9, 10) oder eines Geräteeinsatzes blockieren, **dadurch gekennzeichnet, dass** mindestens ein einer jeweiligen Anschlusseinrichtung (9, 10) oder einem jeweiligen Geräteeinsatz benachbart angeordnetes separates Verriegelungselement (11, 16, 16' 25) vorgesehen ist, welches einerseits über mindestens eine zweite Verbindung (13, 19, 19' 20, 20') mit der jeweiligen Anschlusseinrichtung (9, 10) oder dem jeweiligen Geräteeinsatz verbindbar ist und welches andererseits Verbindungseinrichtungen (15, 15', 32, 33) mindestens einer dritten Verbindung (31) bereitstellt, welche formschlüssig in Bereiche (8', 32', 33) des Kanals (2, 3, 26, 26') oder Gehäuses eingreifen und eine auseinandergerichtete Bewegung der komplementär zusammenwirkenden Bereiche (22, 23, 6, 6', 7, 29, 30) der Anschlusseinrichtung (9, 10) oder des Geräteeinsatzes einerseits und des Kanals (2, 3, 26, 26') oder Gehäuses andererseits quer zu der Einsetzrichtung blockieren, so dass eine Sicherung bzw. Verriegelung der ersten Verbindung erfolgt.

2. Installations- und Verteilersystem nach Anspruch 1, bei dem eine Verriegelung der ersten Verbindung dadurch erfolgt, dass mindestens einer der zur ersten Verbindung gehörigen, komplementär zusammenwirkend ausgebildeten Bereiche (22, 23, 6, 6', 7, 29, 30) an der Anschlusseinrichtung (9,10) oder am Geräteeinsatz einerseits und/oder am Kanal (2, 3, 26, 26') oder Gehäuses andererseits durch das Verriegelungselement (11, 16, 16', 25) und die formschlüssig zusammenwirkenden Verbindungseinrichtungen (15, 15', 8, 8', 32, 32', 33) in seiner federnden oder materialelastischen Eigenschaft blockiert wird.

3. Installations- und Verteilersystem nach Anspruch 1 oder 2, bei dem der an der Anschlusseinrichtung (9, 10) oder am Geräteeinsatz komplementär federnd oder materialelastisch ausgebildete Bereich der ersten Verbindung als federnde oder materialelastische Zunge (22) und/oder Raste (23) ausgebildet ist.

4. Installations- und Verteilersystem nach einem der Ansprüche 1 bis 3, bei dem der am Kanal (2, 3, 26, 26') oder Gehäuse komplementär federnd oder materialelastisch ausgebildete Bereich der ersten Verbindung als federnde und/oder materialelastisch ausgebildete Wand (6, 6', 7, 29, 30) des Kanals (2, 3, 26, 26') oder Gehäuses ausgebildet ist, vorzugsweise quer zu einer Erstreckung oder Längsrichtung 14 des Kanals oder Gehäuses (2, 3, 26, 26') federnd und/oder materialelastisch ausgebildet.

5. Installations- und Verteilersystem nach einem der Ansprüche 1 bis 4, bei dem das Verriegelungselement (11, 16, 16', 25) im Wesentlichen senkrecht zu und zwischen den Kanal- oder Gehäusewänden (6, 6' 7, 29, 30) vorgesehen ist und die dritte Verbindung über beidseitig den gegenüberliegenden Kanal- oder Gehäusewänden (6, 6' 7, 29, 30) zugewandte Verbindungseinrichtungen (15, 15', 32, 32', 33) erfolgt, mit denen die Kanal- oder Gehäusewände (6, 6', 7, 29, 30) formschlüssig und abstandfest über das Verriegelungselement (11, 16, 16', 25) verbindbar und so in ihrer quer zur Erstreckung oder Längsrichtung 14 des Kanals (2, 3, 26, 26') oder Gehäuses federnden oder materialelastischen Eigenschaft blockierbar sind.

6. Installations- und Verteilersystem nach einem der Ansprüche 1 bis 5, bei dem die zweite Verbindung durch mindestens ein am Verriegelungselement (11, 16, 16') vorgesehenes und mit komplementär ausgebildeten Bereichen (19, 19`, 20, 20`) der jeweiligen Anschlusseinrichtung (9, 10) oder des Geräteeinsatzes federnd und/oder materialelastisch zusammenwirkendes Schnapp- oder Rastverbindungselement (13) bereitgestellt wird.

7. Installations- und Verteilersystem nach einem der Ansprüche 1 bis 6, bei dem mehrere nebeneinander angeordnete Anschlusseinrichtungen (9, 10) oder Geräteeinsätze in einer Längsrichtung (14) des Kanals (2, 3, 26, 26') oder Gehäuses nebeneinander angeordnet und über jeweils zwischen ihnen angeordnete Verriegelungselemente (11, 16, 16', 25) und deren Schnapp- oder Rastverbindungselemente (13) einrastend miteinander verbindbar sind.

8. Installations- und Verteilersystem nach einem der Ansprüche 1 bis 7, bei dem das Verriegelungselement (11, 16, 16', 25) Einrichtungen (17) zur elektrischen oder elektronischen Kontaktierung der Anschlusseinrichtungen (9, 10) oder Geräteeinsätze untereinander und/oder zur Kontaktierung von Steckverbindungen aufweist, vorzugsweise ausgebildet als Stecker- und Buchsen-Kontakte.

9. Installations- und Verteilersystem nach Anspruch 8, bei dem die Einrichtungen (17) zur elektrischen oder elektronischen Kontaktierung zusammen mit dem Schnapp- oder Rastverbindungselement (13) der zweiten Verbindung aktivierbar sind.

10. Installations- und Verteilersystem nach einem der Ansprüche 1 bis 9, bei dem die Anschlusseinrichtungen (9, 10) oder Geräteeinsätze und das Verriegelungselement (11, 16, 16') durch zu einer Bedienungsseite geöffnete Ausnehmungen (5, 27') in den Kanal (2, 3, 26') oder das Gehäuses einsetzbar und dort fixierbar sind, vorzugsweise durch eine Ausnehmung (5, 27) in der Oberseite des Kanals (2, 3) oder des Gehäuses.

11. Installations- und Verteilersystem nach Anspruch 10, bei dem das Verriegelungselement (11, 16, 16') zusammen mit den Anschlusseinrichtungen oder Geräteeinsätzen im Kanal (2, 3, 26') oder Gehäuses einrastend fixierbar ist und eine als Schnapp- oder Rastverbindung ausgebildeten Verbindungseinrichtung ausweist, die mit komplementär federnd oder materialelastisch ausgebildeten Bereichen am Kanal oder Gehäuse zusammenwirkt.

12. Installations- und Verteilersystem nach Anspruch 10 oder 11, bei dem das Verriegelungselement (11, 16) den Wandbereichen des Kanals (2, 3) oder Gehäuses gegenüberliegend vorgesehene Anlaufschrägen (12) aufweist, durch die die Kanal- oder Gehäusewände (6, 6',7) zum Einsetzen des Verriegelungselements (11, 16) federnd oder materialelastisch verformbar sind.

13. Installations- und Verteilersystem nach Anspruch 10 oder 11, bei dem das Verriegelungselement (16') den Wandbereichen des Kanals (26') oder Gehäuses gegenüberliegend vorgesehene federnde Zungen (34) aufweist, die durch das Einsetzen des Verriegelungselements (16') zwischen die Kanal- oder Gehäusewände (6') federnd oder materialelastisch verformbar sind und rückfedernd eine Raste (35) bilden.

14. Installations- und Verteilersystem nach einem der Ansprüche 1 bis 9, bei dem die Anschlusseinrichtungen (9, 10) oder Geräteeinsätze durch zu einer Bedienungsseite geöffnete Ausnehmungen (27) in den Kanal (26) oder das Gehäuses einsetzbar und dort fixierbar sind, wobei das Verriegelungselement (25) durch zu einer Montageseite geöffnete Ausnehmungen in den Kanal (26) oder das Gehäuses einsetzbar ist, vorzugweise durch einen offenen Kanalquerschnitt (28) oder eine Montageöffnung im Gehäuse einschiebbar ist.

15. Installations- und Verteilersystem nach einem der Ansprüche 1 bis 14, bei dem die Anschlusseinrichtungen (9, 10) oder Geräteeinsätze zu einer Bedienungsseite einen Deckel (9', 10') oder eine Deckfläche aufweisen, die das benachbart zur den Anschlusseinrichtungen (9, 10) oder Geräteeinsätzen angeordnete Verriegelungselement (11, 16, 16') mindestens teilweise an seiner Oberseite überdecken.

16. Installations- und Verteilersystem nach einem der Ansprüche 1 bis 15, ausgebildet als Brüstung- oder Wandsystem.

17. Installations- und Verteilersystem nach einem der Ansprüche 1 bis 14, ausgebildet als Auf-Tisch-System für Möbel, vorzugsweise als Auf-Tisch-Steckdosenleiste.

18. Verriegelungselement (11, 16, 16', 25) in einem Installations- und Verteilersystem nach einem der Ansprüche 1 bis 15, ausgebildet als im Wesentlichen flächiges Element, welches an mindestens einer Stirnseite einer Anschlusseinrichtung (9, 10) oder eines Geräteeinsatzes vorgesehen ist, die in einen Kanal (2, 3, 26, 26') oder Gehäuse des Installationssystems einsetzbar sind, wobei das Verriegelungselement (11, 16, 16' 25) sich an den stirnseitigen Querschnitt der Anschlusseinrichtung (9, 10) oder des Geräteeinsatzes angepasst quer zu einer Längsrichtung (14) des Kanals (2, 3, 26, 26') oder Gehäuses sowie zwischen den in Längsrichtung (14) orientierten Wänden (6, 6', 7, 29, 30) des Kanals (2, 3, 26, 26') oder Gehäuses erstreckt, wobei das Verriegelungselement (11, 16, 16', 25) einerseits sich in Längsrichtung (14) erstreckende Verbindungseinrichtungen (13) zur Verbindung mit jeweils mindestens einer Anschlusseinrichtung (9, 10) oder einem Geräteeinsatz aufweist und andererseits im Wesentlichen quer zur Längsrichtung und zwischen den Wänden (6, 6', 7, 29, 30) des Kanals (2, 3, 26, 26') oder Gehäuses sich erstreckende, beidseitig den gegenüberliegenden Kanal- oder Gehäusewänden (6, 6', 7, 29, 30) zugewandte und mit letzteren zusammenwirkende Verbindungseinrichtungen (15, 15', 32) zur Verbindung mit den Wänden (6, 6', 7, 29, 30) des Kanals (2, 3, 26, 26') oder Gehäuses aufweist.

19. Verriegelungselement (11, 16, 16', 25) nach Anspruch 18, bei dem die sich in Längsrichtung (14) erstreckenden Verbindungseinrichtungen (13) zur Verbindung mit jeweils mindestens einer Anschlusseinrichtung (9, 10) oder einem Geräteeinsatz als Schnapp- oder Rastverbindungen (13) ausgebildet sind, die mit komplementär in oder an den Längsseiten der jeweiligen Anschlusseinrichtung (9, 10) oder des Geräteeinsatzes ausgebildeten Bereichen (19, 19', 20, 20') federnd oder materialelastisch zusammenwirken.

20. Verriegelungselement (11, 16, 16', 25) nach Anspruch 18 oder 19, bei dem die Verbindungseinrichtung (15, 15', 32) zur Verbindung mit den Wänden (6, 6', 7, 29, 30) des Kanals (2, 3, 26, 26') oder Gehäuses als formschlüssige Verbindung so ausgebildet ist, dass durch das Verriegelungselement (11, 16, 16', 25) eine die Wände verbindende abstandsfeste Brücke zwischen den Wänden entsteht.

21. Verriegelungselement (11, 16, 16') nach Anspruch 20, bei dem die Verbindungseinrichtung (15, 15') zur Verbindung mit den Wänden (6, 7) des Kanals oder Gehäuses als beidseitig den gegenüberliegenden Kanal- oder Gehäusewänden (6, 6', 7) zugewandter hakenförmiger Vorsprung (15, 15') ausgebildet ist, welcher einen jeweils komplementär dazu ausgebildeten Vorsprung (8', 33) im Wandbereich des Kanals oder Gehäuses formschlüssig hintergreift.

22. Verriegelungselement (11, 16, 16') nach Anspruch 21, bei dem der als hakenförmige Vorsprung der Verbindungseinrichtung (15, 15') von der Bedienungs- oder Einschubseite aus gesehen nach unten geöffnet ist und der komplementär dazu ausgebildeten Vorsprung (8', 33) im Wandbereich des Kanals oder Gehäuses dazu entgegengesetzt hakenförmigen ausgebildet und nach oben geöffnet ist.

23. Verriegelungselement (11, 16, 16') nach einem der Ansprüche 18 bis 22, welches eine im Kanal (2, 3, 26') oder Gehäuses einrastend fixierbare und als Schnapp- oder Rastverbindung ausgebildete Verbindungseinrichtung aufweist, die federnd oder materialelastisch verformbar mit komplementär federnd oder materialelastisch ausgebildeten Bereichen am Kanal oder Gehäuse zusammenwirkt.

24. Verriegelungselement (11, 16) nach Anspruch 23, bei dem den Wandbereichen des Kanals (2, 3) oder Gehäuses gegenüberliegend vorgesehene Anlaufschrägen (12) vorgesehen sind, durch die die Kanal- oder Gehäusewände (2, 3) zum Einsetzen des Verriegelungselements (11, 16) federnd oder materialelastisch verformbar sind.

25. Verriegelungselement (16') nach Anspruch 23, bei dem den Wandbereichen des Kanals (26') oder Gehäuses gegenüberliegend vorgesehene federnde Zungen (34) vorgesehen sind, die nach dem Einsetzen des Verriegelungselements (16') rückfedernd eine Raste (35) bilden.

26. Verriegelungselement (25) nach Anspruch 20, bei dem die Verbindungseinrichtung (31) zur Verbindung mit den Wänden (29, 30) des Kanals (26) oder Gehäuses als beidseitig den gegenüberliegenden Kanal- oder Gehäusewänden (29, 30) zugewandte, vorspringende Nut (32) oder Feder ausgebildet ist, in welche eine komplementär dazu ausgebildeten und im Wandbereich des Kanals (26) oder Gehäuses angeordnete Feder (32') oder Nut eingreift.

27. Verriegelungselement (25) nach Anspruch 26, bei dem die Nut (32) C-förmig konkav so ausgebildet ist, dass sie eine T-förmige Feder (32') umschließt.

28. Verriegelungselement (11, 16, 16', 25) nach einem der Ansprüche 18 bis 27, bei dem in einer Längsrichtung (14) des Kanals (2, 3, 26, 26`) oder Gehäuses ausgerichtete und zugängliche Einrichtungen (17) zur elektrischen oder elektronischen Kontaktierung der Anschlusseinrichtungen (9, 10) oder Geräteeinsätze und/oder zur Kontaktierung von elektrischen Leitungen zur Energieversorgung oder Datenübermittlung vorgesehen sind.

29. Verriegelungselement (11, 16, 16', 25) nach Anspruch 28, bei dem die Einrichtungen zur Kontaktierung als in Längsrichtung (14) des Kanals (2, 3, 26, 26') oder Gehäuses vorspringende Stecker (17) ausgebildet sind, die in komplementär ausgebildete Buchsen-Kontakte der Anschlusseinrichtungen (9, 10) oder Geräteeinsätze eingreifen.
